# EUROPÄISCHE PATENTSCHRIFT

(11) **EP 2 171 808 B1**
(45) Veröffentlichungstag und Bekanntmachung des Hinweises auf die Patenterteilung: **11.03.2015**
(21) Anmeldenummer: 08760782.6
(22) Anmeldetag: 10.06.2008
(51) Int. Cl.: H01R 25/14, H01R 13/506, B60M 1/34, B60M 1/30

(54) **ISOLIERPROFIL FÜR EINE MEHRPOLIGE SCHLEIFLEITUNG**
INSULATING PROFILE FOR A MULTI-POLE CONDUCTOR LINE
PROFILÉ ISOLANT POUR RAIL CONDUCTEUR MULTIPOLAIRE

(30) Priorität: 11.06.2007 DE 102007026908
(43) Veröffentlichungstag der Anmeldung: 07.04.2010
(73) Patentinhaber: Conductix-Wampfler GmbH, 79576 Weil am Rhein-Märkt (DE)
(72) Erfinder: SCHMIEDLE, Andreas, 79541 Lörrach (DE)
(74) Vertreter: Charrier, Rapp & Liebau
(86) Internationale Anmeldenummer: PCT/EP2008/057222
(87) Internationale Veröffentlichungsnummer: WO 2008/152034

(56) Entgegenhaltungen:
- WO-A-01/91250
- DE-A1- 10 359 541
- DE-A1- 19 912 574

## Beschreibung

Die Erfindung betrifft ein Isolierprofil für eine mehrpolige Schleifleitung nach dem Oberbegriff des Anspruchs 1 und eine mehrpolige Schleifleitung, bei der ein solches Isolierprofil als Bestandteil Verwerdung finden kann. Isolierprofile und Schleifleitungen dieser Art sind beispielsweise aus der DE 103 59 541 A1 und aus der DE 199 17 309 A1 bekannt. Bei den Isolierprofilen handelt es sich jeweils um ein Kunststoff-Extrusionsprofil, in dem die Stromschienen der Schleifleitung voneinander isoliert angeordnet sind. Das Profil besteht aus einer Vielzahl von Kammern, von denen eine Gruppe zur Vorderseite des Profils hin offen ist. In den Kammern dieser Gruppe sind die Stromschienen angeordnet und von der offenen Vorderseite her für die Stromabnehmer eines entlang der Schleifleitung fahrenden Fahrzeugs zugänglich. Zwei andere Gruppen von Kammern, die im Querschnitt geschlossen sind, bilden die rückseitige Basis des Profils bzw. die Isolation zwischen den Stromschienen.

Solche Isolierprofile aus Kunststoff sind wegen ihrer Abmessungen, des Gewichts der darin enthaltenen Stromschienen sowie der Belastung im Betrieb durch den Andruck der Stromabnehmer nicht steif genug für eine selbsttragende Konstruktion. Es kommt hinzu, dass Schleifleitungen der fraglichen Art im allgemeinen eine Gesamtlänge haben, die es erfordert, mehrere Isolierprofile stirnseitig aufeinanderfolgend anzuordnen, woraus sich die Notwendigkeit einer exakt fluchtenden Ausrichtung der einzelnen Isolierprofile ergibt. Daher werden zum Aufbau einer Schleifleitung die Isolierprofile rückseitig an parallel zu ihnen verlaufenden, üblicherweise aus Metall gefertigten Trägerprofilen befestigt, die der gesamten Anordnung eine ausreichende mechanische Stabilität verleihen. Die Montage der Isolierprofile an den Trägerprofilen trägt zum Aufwand bei der Montage einer Schleifleitung bei und bedarf daher einer Optimierung.

Darüber hinaus besteht das Problem, dass an den Verbindungsstellen zwischen den einzelnen Isolierprofile einer Schleifleitung die isolierende Wirkung unterbrochen ist. Dort treffen die Längen der Luft- und Kriechstrecken zwischen den einzelnen Stromschienen, d.h. der kürzesten Wege zwischen den Oberflächen zweier benachbarter Stromschienen durch den freien Raum bzw. entlang der Oberfläche des Isolierprofils, die entlang eines Isolierprofils durch dessen Querschnittsform vorgegeben sind, nicht mehr zu. Vielmehr sind an einer solchen Verbindungsstelle, wenn nicht zusätzliche Maßnahmen getroffen werden, die Länge der Luftstrecke durch den direkten Abstand zweier benachbarter Stromschienen und die Länge der Kriechstrecke durch den kürzesten Weg zwischen zwei benachbarten Stromschienen auf der Stirnseite des Isolierprofils gegeben. Diese an einer. Verbindungsstelle wirksamen Längen sind im allgemeinen deutlich kürzer als die entsprechenden Längen entlang des Isolierprofils. Die Längen der Luft- und Kriechstrecken unterliegen einschlägigen Sicherheitsvorschriften, die unter dem Gesichtspunkt der Produkthaftung eingehalten werden müssen, und zwar entlang einer gesamten Schleifleitung, d.h. auch an besagten Verbindungsstellen. Dies ist natürlich um so schwieriger zu erreichen, je kompakter die Gesamtabmessungen einer Schleifleitung sein sollen.

Eine Möglichkeit zur Verlängerung der Luft- und Kriechstrecken an den Verbindungsstellen zwischen den einzelnen Isolierprofilen auf sicherheitstechnisch vorschriftsmäßige Werte besteht in der Einfügung isolierender Verbindungselemente in diesem Bereich im Zuge des Zusammenbaus der einzelnen Isolierprofile. Hierzu müssen die Endbereiche der Isolierprofile zur Aufnahme besagter Verbindungselemente vorbereitet werden, wodurch weiterer Aufwand bei der Herstellung der Isolierprofile verursacht wird. Dies gilt insbesondere dann, wenn dabei eine nachträgliche Bearbeitung der Isolierprofile von den Stirnseiten her vorgenommen werden muss.

Durch die Montage der Isolierprofile auf metallischen Trägerschiene ergibt sich das zusätzliche Problem, dass die an sich durch die Form des Isolierprofils und ggf. zusätzlich vorgesehener Verbindungselemente gegebenen Längen der Kriechstrecken an einer Verbindungsstelle zweier Isolierprofile im Bereich der Rückseite derselben durch einen Kontakt mit dem dort vorhandenen, elektrisch leitenden Trägerprofil verkürzt werden kann. Um dies zu vermeiden, muss an den Verbindungsstellen der Isolierprofile für eine ausreichende Isolierung auch gegenüber den Trägerprofilen gesorgt werden, was üblicherweise durch die Einfügung zusätzlicher Isolatorelemente zwischen den Isolierprofilen und den Trägerprofilen geschieht und dadurch zusätzlichen Montageaufwand verursacht.

In Anbetracht dessen besteht die Aufgabe der Erfindung darin, die Montage einer mehrpoligen Schleifleitung zu vereinfachen und zu optimieren.
Diese Aufgabe wird erfindungsgemäß durch ein Isolierprofil mit den Merkmalen des Anspruchs 1 und durch eine Schleifleitung mit den Merkmalen des Anspruchs 9 gelöst. Vorteilhafte Ausgestaltungen der Erfindung sind in den jeweiligen Unteransprüchen angegeben.

Die Erfindung geht von einem Isolierprofil bekannter Art für eine mehrpolige Schleifleitung aus, welches durch Extrusion aus Kunststoff hergestellt ist und eine regelmäßige Anordnung von mehreren sich in Längsrichtung des Profils erstreckenden Kammern aufweist. Die Erfindung sieht vor, dass an der Rückwand des Isolierprofils zur Befestigung an einem Trägerprofil geeignete Befestigungselemente einstückig angeformt sind. Hierdurch wird die Anzahl der bei der Montage einer Schleifleitung zu handhabenden Teile verringert. Die Ausbildung der Befestigungselemente als flexible Schnapphaken erlaubt eine rasche Montage des Isolierprofils an einem Trägerprofil ohne Werkzeugeinsatz. Eine besonders zweckmäßige Form der Befestigungselemente weist zwei aufeinander zu gerichtete Eingriffsabschnitte auf, die zu einer formschlüssigen Verrastung mit einem dazu komplementär, insbesondere schwalbenschwanzförmig geformten Vorsprung eines Trägerprofils geeignet sind.

Im Hinblick auf die Isolationswirkung ist eine regelmäßige Anordnung von Abstandshaltern vorgesehen, die sich von der Rückwand des Isolierprofils aus nach hinten erstrecken und diese nach der Montage des Isolierprofils an einem Trägerprofil von diesem beabstandet halten. Hierdurch wird vermieden, dass das metallische Trägerprofil im Bereich der Verbindungsstellen zwischen aufeinanderfolgenden Isolierprofilen die rückseitigen Kriechstrecken auf den Stirnseiten der Isolierprofile partiell kurzschließen könnte und dadurch die vorschriftsmäßige Länge dieser Kriechstrecken unterschritten würde.

Unter dem Gesichtspunkt der mechanischen Steifigkeit der Rückwand gegenüber der Einwirkung der von Stromabnehmern im Betrieb auf das Isolierprofil ausgeübten Kräfte sowie der Schaffung eines Spielraumes für eine Durchbiegung des Isolierprofils aufgrund solcher Kräfte ist eine nach innen vertiefte Grundform der zwischen den Abstandshaltern gelegenen Abschnitte der Rückwand besonders vorteilhaft. Für die Herstellung des erfindungsgemäßen Isolierprofils in Extrusionstechnik empfehlen sich als Abstandshalter insbesondere in Längsrichtung des Isolierprofils verlaufende Rippen, die von der Rückwand nach hinten abragen.

Weitere besonders zweckmäßige Maßnahmen sind die symmetrische Abstützung jeder Stromschiene durch zwei zueinander symmetrische, überwiegend senkrecht zur Rückwand des Isolierprofils, aber etwas schräg verlaufende Seitenwände einer jeweils unter dem Aufnahmeraum einer Stromschiene gelegenen, geschlossenen Kammer und der Übergang dieser Seitenwände in die Rückwand an den am weitesten nach innen in das Isolierprofil zurückreichenden Stellen der nach innen vertieften Abschnitte der Rückwand. Hierdurch ergibt sich im Fall einer Krafteinwirkung durch die Stromabnehmer auf die Stromschienen eine gleichmäßige Verteilung des Kraftflusses zur Rückwand des Isolierprofils und eine optimale Überleitung dieses Kraftflusses in die Rückwand und weiter in die Abstandshalter, welche für die Abstützung des Isolierprofils an dem Trägerprofil sorgen.

Neben der Gestaltung eines Isolierprofils im Hinblick auf die Montage an einem Trägerprofil ist ein weiterer Aspekt der Erfindung eine Schleifleitung als Gesamteinheit, die aus in ihrer Form aufeinander abgestimmten Isolierprofilen und Trägerprofilen besteht.

Weitere Einzelheiten und Vorteile der Erfindung gehen aus den Unteransprüchen und aus der nachfolgenden Beschreibung eines Ausführungsbeispiels anhand der Zeichnungen hervor. In den Zeichnungen zeigt
- Fig. 1: eine Querschnittsansicht eines erfindungsgemäßen Isolierprofils,
- Fig. 2: eine Querschnittsansicht des Isolierprofils von Fig. 1 in Verbindung mit einem Trägerprofil,
- Fig. 3: eine perspektivische Ansicht der miteinander verbundenen Profile von Fig. 2.

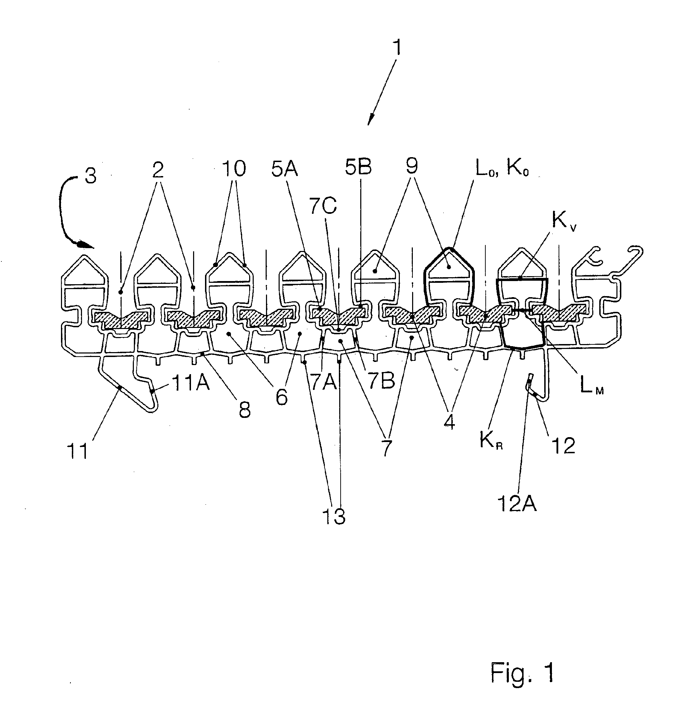

Wie aus Fig. 1 zu ersehen ist, weist ein erfindungsgemäßes Isolierprofil 1 im Querschnitt eine regelmäßige Anordnung von mehreren Kammern auf, die sich in Längsrichtung des Profils, d.h. senkrecht zur Zeichenebene von Fig. 1 erstrecken. Eine Gruppe von Kammern 2 ist im Querschnitt nach einer Seite hin offen und definiert dadurch eine offene, in Fig. 1 oben befindliche Vorderseite 3 des Isolierprofils 1. Die Kammern 2 der offenen Gruppe weisen jeweils zwei zur formschlüssigen Halterung einer Stromschiene 4 geeignete Hinterschneidungen 5A und 5B auf. Wandabschnitte mehrerer nebeneinander liegender geschlossener Kammern 6 und 7 bilden zusammen eine der offenen Vorderseite 3 des Isolierprofils gegenüberliegende, in Fig. 1 unten befindliche Rückwand 8 des Isolierprofils 1.

Mit den hier im Zusammenhang mit einer Gruppe von Kammern verwendeten Begriffen "offen" und "geschlossen" ist nicht eine Eigenschaft der Gruppierung, sondern eine Eigenschaft jeder einzelnen der zu der Gruppe gehörenden Kammern gemeint. Der Begriff "Gruppe" soll hierbei zum Ausdruck bringen, dass alle zu einer Gruppe gehörigen Kammern die gleiche Querschnittsform haben. Die in Fig. 1 gezeigte Lage des Isolierprofil 1 ist nicht notwendigerweise seine Einbaulage an einem Einsatzort, denn diese ist typischerweise hochkant, also gegenüber der Darstellung von Fig. 1 um ±90° gedreht. Sie könnte aber auch um 180° gedreht sein. Soweit hier Begriffe wie "oben" und "unten" verwendet werden, die vertikale Anordnungen kennzeichnen, beziehen sich diese lediglich auf die Lage des Isolierprofils 1 in Fig. 1.

Die Kammern 6 einer ersten geschlossenen Gruppe erstrecken sich von der Rückwand 8 des Profils 1 aus in Richtung der offenen Vorderseite 3 des Profils 1 bis über die Hinterschneidungen 5A, 5B der Kammern 2 der offenen Gruppe hinaus. Jeweils eine Kammer 6 dieser ersten geschlossenen Gruppe ist zwischen zwei benachbarten Kammern 2 der offenen Gruppe angeordnet. Durch die Hinderschneidungen 5A, 5B ergibt sich für die Kammern 6 der ersten geschlossenen Gruppe jeweils eine Einengung ihrer Breite im mittleren Bereich. Zwischen zwei benachbarten Kammern 6 der ersten geschlossenen Gruppe ist unterhalb der dazwischen liegenden Kammer 2 der offenen Gruppe jeweils eine Kammer 7 einer anderen geschlossenen Gruppe angeordnet. An der offenen Vorderseite 3 des Isolierprofil 1 ist zwischen zwei benachbarten Kammern 2 der offenen Gruppe jeweils eine Kammer 9 einer weiteren geschlossenen Gruppe angeordnet, die jeweils an eine Kammer 6 der ersten geschlossenen Gruppe angrenzt, und zwar an deren oberem, d.h. vorderem Ende. Die der Vorderseite 3 des Profils 1 zugewandte Außenwand 10 einer Kammer 9 hat im Querschnitt eine nach vorne vorspringende Form, bei dem in Fig. 1 gezeigten Beispiel im wesentlichen die eines Satteldachs.

Wie aus der Querschnittsansicht von Fig. 1 unmittelbar ersichtlich ist, verläuft entlang eines Isolierprofils 1 die kürzeste Verbindung zwischen zwei benachbarten Stromschienen 4 sowohl im freien Raum, als auch auf der Oberfläche eines Isolators jeweils auf der vorderseitigen Oberfläche des Isolierprofils 1, d.h. die Längen L₀ und K₀ der sogenannten Luft- und Kriechstrecken sind gleich lang und durch die Querschnittsform der den offenen Kammern 2 zugewandten Wandabschnitte der geschlossenen Kammern 6 sowie der Außenwände 10 der geschlossenen Kammern 9 vorgegeben. In Fig. 1 sind die in diesem Fall zusammenfallenden Luft- und Kriechstrecken L₀ und K₀ an einer Kammer 6 und der zugehörigen Kammer 9 durch eine dicke Linie entlang besagter Wandabschnitte bzw. Außenwände gekennzeichnet.

An einem stirnseitigen Ende eines Isolierprofils 1 ist dessen Isolationswirkung jedoch unterbrochen, so dass dort, wenn nicht zusätzliche Maßnahmen getroffen würden, die Luftstrecke L_{M} einfach durch den kürzesten Abstand zwischen zwei benachbarten Stromschienen 4 gegeben wäre. Diese Luftstrecke L_{M}, die wesentlich kürzer ist als die entlang des Profils 1 wirksame Luftstrecke L₀, ist in Fig. 1 an einer Stelle durch eine kurze dicke Linie gekennzeichnet. Die wirksame Luftstrecke kann dadurch auf eine ausreichende, d.h. vorschriftsmäßige Länge gebracht werden, dass in die geschlossene Kammer 6 bei der stirnseitigen Verbindung zweier Isolierprofile 1 ein isolierendes Verbindungselement von geeigneter Form eingesteckt wird. Dies ist jedoch hier nicht von Interesse.

Für die Kriechstrecke ist hier die Querschnittforn der zwischen den Stromschienen 4 liegenden Kammern 6 maßgeblich, da nun ein Kriechstrom auf der Stirnfläche des Profils 1 entlang der stirnseitigen Endflächen der Wände der Kammern 6 fließen kann. Für einen solchen Kriechstrom bieten die Wände der Kammern 6 zwei Pfade, nämlich einen über die Vorderseite des Profils 1 und einen über die Rückseite des Profils 1. Die jeweiligen Kriechstrecken K_{V} und K_{R} sind in Fig. 1 ebenfalls als dicke Linien eingetragen. Während die Kriechstrecke K_{R} über die Rückwand 8 des Profils 1 verläuft, ist für die Kriechstrecke K_{V} jeweils die Trennwand zwischen einer Kammer 6 und angrenzenden Kammer 9 maßgeblich. Diese Trennwand dient unter anderem der Erhöhung der mechanischen Stabilität und ist hinsichtlich der Länge der wirksamen Kriechstrecke unschädlich, da die Längen der beiden Kriechstrecken K_{V} und K_{R} bei dem in Fig. 1 gezeigten Ausführungsbeispiel etwa gleich sind. Ein Weglassen besagter Trennwand würde zwar die Kriechstrecke K_{V}, nicht jedoch die insgesamt wirksame Kriechstrecken verlängern, da letztere durch die kürzere der beiden Kriechstrecken K_{V} und K_{R} bestimmt wird.

Wie Fig. 1 erkennen läßt, sorgt die Erstreckung der Kammern 6 über einen großen Teil der Höhe des Profils 1, d.h. von der Rückwand 8 bis deutlich über die Hinterschneidungen 5A, 5B hinaus für einen relativ großen Wert der Längen der Kriechstrecken Kv und K_{R}. Um bei einer geringeren Erstreckung der Kammern 6 in der Höhe die gleiche Kriechstreckenlänge zu erzielen, müßte die seitliche Ausdehnung der Kammern 6 größer sein, was insgesamt zu einer Verbreiterung des Profils 1 führen würde. Dies würde dem Ziel einer möglichst kompakten Bauweise, wie es bei modernen Schleifleitungen verfolgt wird, zuwiderlaufen. Die erfindungsgemäße Gestaltung der Kammern 6 erlaubt es also, eine kompakte Bauweise einer Schleifleitung mit der Einhaltung vorschriftsmäßiger Mindestlängen der Kriechstrecken an den stirnseitigen Verbindungsstellen der einzelnen Isolierprofile 1, die unvermeidbar zum Aufbau einer Schleifleitung üblicher Länge gehören, in Einklang zu bringen.

Die rückseitige Kriechstrecke K_{R} ließe sich zwar durch den Verzicht auf die Ausbildung der hinter den Stromschienen 4 liegenden Kammern 7, d.h. durch ein direktes Angrenzen benachbarter Kammern 6 aneinander hinter einer Stromschiene noch verlängern, doch würde dies die Stabilität des Profils 1 beeinträchtigen, da jede Stromschiene 4 in diesem Fall nur noch durch eine einzige Kammertrennwand abgestützt würde, und man müßte dann außerdem zur Verlängerung der insgesamt wirksamen Kriechstrecke auch die Kriechstrecke K_{V} durch den Verzicht auf die Trennwand zwischen den Kammern 6 und 9 verlängern, wodurch die mechanische Stabilität weiter verringert würde.

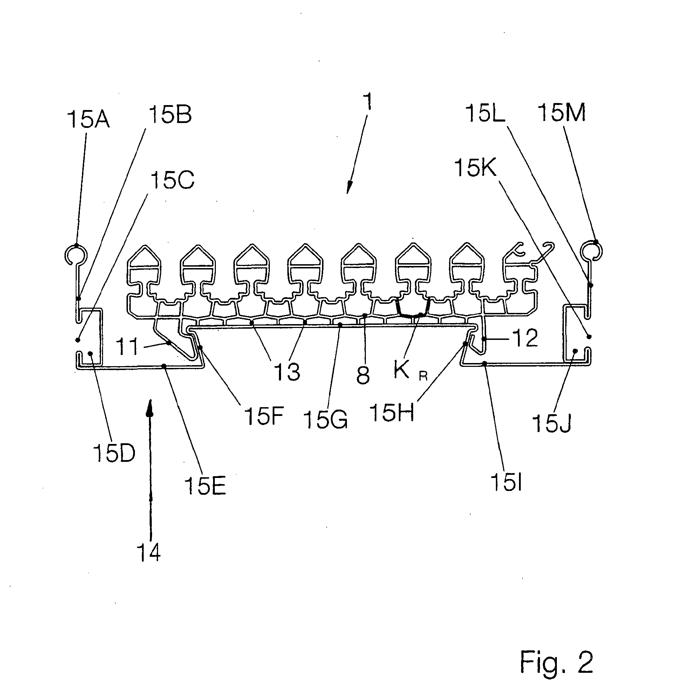

In den Figuren 1 und 2 sind auch zwei einstückig an die Rückwand 8 angeformte, im wesentlichen hakenförmige Befestigungselemente 11 und 12 erkennbar. Diese dienen der Befestigung des Isolierprofils 1 an dem Trägerprofil 14 durch Aufschnappen. Wie Fig. 2 zeigt, stützen im fertig montierten Zustand Rippen 13, welche sich in einer regelmäßigen, im gezeigten Beispiel äquidistanten Anordnung von der Rückwand 8 des Isolierprofils 1 aus senkrecht nach hinten erstrecken, die Rückwand 8 des Isolierprofils 1 auf dem Trägerprofil 14 ab.

Durch die Rippen 13 wird ein flächiger Kontakt zwischen der Rückwand 8 des Isolierprofils 1 und dem Trägerprofil 14 vermieden. Die Rippen 13 fungieren somit als Abstandshalter zwischen der Rückwand 8 des Isolierprofils 1 und dem Trägerprofil 14. Wenn die Rückseite des Isolierprofils 1 auf dem unisolierten metallischen Trägerprofil 14 flächig aufliegen würde, dann würde dadurch der entlang der Rückwand 8 verlaufende Abschnitt der rückseitigen Kriechstrecke K_{R} kurzgeschlossen. In diesem Fall wäre die Länge der rückseitigen Kriechstrecke K_{R} nur noch durch die Summe der Querschnittslängen der im wesentlichen senkrecht, jedoch etwas schräg zur Rückwand 8 verlaufenden Seitenwände 7A und 7B der hinter einer offenen Kammer 2 liegenden geschlossenen Kammer 7 gegeben. Diese Länge wäre deutlich kürzer als die in den Figuren 1 und 2 eingetragene Gesamtlänge der rückseitigen Kriechstrecke K_{R}, die auch den Beitrag eines entlang der Rückwand 8 verlaufenden Abschnitts umfasst. Im gezeigten Beispiel wäre die rückseitige Kriechstrecke K_{R} dann nur noch etwa halb so lang.

Hierzu ist anzumerken, dass die Rückwand 8 in der in den Figuren 1 und 2 gezeigten Ausführungsform im Querschnitt zwar nicht eben, sondern in Form einer Zickzacklinie verläuft, so dass sie ohne Vorhandensein der Rippen 13 auch nicht flächig, sondern nur linienhaft, nämlich auf senkrecht zur Zeichenebene verlaufenden Linien auf dem metallischen Trägerprofil 14 aufliegen würde. Insofern wäre die rückseitige Kriechstrecke K_{R} durch das Trägerprofil 14 zwar nicht im strengen elektrischen Sinne kurzgeschlossen, doch nach den einschlägigen Sicherheitsvorschriften gilt ein Luftspalt nur dann als isolierend, wenn er eine bestimmte Mindestweite hat. Eine nur schwach ausgeprägte Zickzacklinie, wie sie bei dem gezeigten Ausführungsbeispiel vorliegt, würde somit nach den einschlägigen Sicherheitsvorschriften wegen zu geringer Luftspaltweite ebenso als durch das Trägerprofil 14 kurzgeschlossen gelten wie eine ebene, tatsächlich flächig aufliegende Rückwand. Diese Vorschrift ist offensichtlich auch sinnvoll, denn durch eine Kraftbeaufschlagung von vorne durch die Stromabnehmer könnte die schwach ausgeprägte Zickzacklinie der Rückwand 8 des Isolierprofils 1 tatsächlich flachgedrückt werden und flächig auf dem mittleren Abschnitt 15G des Trägerprofils 14 aufliegen.

Durch die Rippen 13 wird die Rückwand 8 in einem Abstand von der Oberfläche des Trägerprofils 14 gehalten, der die einschlägigen Sicherheitsvorschriften erfüllt. Die Länge der Rippen 13 im Querschnitt, d.h. deren vertikale Länge in den Figuren 1 und 2, ist hierzu entsprechend zu dimensionieren. Es versteht sich, dass die Funktion der Abstandshaltung nicht unbedingt Elemente in Form von Rippen 13 erfordert, sondern dass beispielsweise einzelne Zylinder, Kegelstümpfe, Noppen oder dergleichen die benötigte Funktion im Grundsatz ebenso erfüllen könnten. Bei einer Herstellung des Isolierprofils 1 im Extrusionsverfahren bietet sich aber die Ausbildung in Form von Rippen 13 unter dem Gesichtspunkt der fertigungstechnischen Kompatibilität besonders an.

Im Grundsatz wäre die Einhaltung eines Abstandes zwischen der Rückwand 8 und dem Trägerprofil 14 durch die Rippen 13 auch gegeben, wenn die Rückwand 8 des Isolierprofils 1 nicht zickzackförmig, sondern eben verlaufen würde. Die Zickzackform der Rückwand 8 hat jedoch den Vorteil, dass bei einer Kraftbeaufschlagung des Isolierprofils 1 von der Vorderseite her durch die in den offenen Kammern 2 laufenden und gegen die dortigen Stromschienen 4 drückenden Stromabnehmer ein gewisser Spielraum für eine Durchbiegung der Rückwand 8 in Richtung auf das Trägerprofil 14 zu besteht, ohne dass es dabei zu einer Unterschreitung der zuvor erwähnten Mindestluftspaltweite kommt.

Hierbei wirkt die Zickzackform der Rückwand 8 mit der Anordnung der geschlossenen Kammer 7 zwischen einer offenen Kammer 2 und einer Rippe 13 sowie mit der Anordnung der beiden Seitenwände 7A und 7B der Kammer 7 zusammen, indem die Seitenwände an innenliegenden, d.h. so weit wie möglich von dem Trägerprofil 14 entfernten Ecken der Zickzacklinie in die Rückwand 8 übergehen, während die Abstützung der Rückwand 8 durch die Rippen 13 an außenliegenden, d.h. so nah wie möglich an das Trägerprofil 14 heranreichenden Ecken der Zickzacklinie erfolgt. Kräfte, die von der Vorderseite her über die Stromschienen 4 ungefähr senkrecht auf das Isolierprofil 1 einwirken, werden infolge dieser Struktur an den innenliegenden Ecken der Zickzacklinie in die Rückwand 8 eingeleitet, wo die Weite des Luftspalts zwischen der Rückwand 8 und dem Trägerprofil 14 am größten ist und daher der größte Spielraum für eine Durchbiegung der Rückwand 8 besteht. Außerdem wird die Biegesteifigkeit der Rückwand 8 insgesamt durch die zu den Krafteinleitungspunkten hin schräg nach innen gerichtete Form der Rückwand 8 vergrößert.

Es versteht sich, dass eine Zickzacklinie nur eine von mehreren möglichen Ausgestaltungen des zugrundeliegenden Prinzips ist. Es kommt nur darauf an, dass die Rückwand 8 in den Abschnitten zwischen den das Isolierprofil 1 rückseitig an dem Trägerprofil 14 abstützenden Abstandshaltern 13 eine allgemein nach innen vertiefte Form hat, also im weitesten Sinne nach innen eingebuchtet ist, wobei die Begriffe "vertieft" und "eingebuchtet" keine Beschränkung auf eine bestimmte Formgebung bedeuten sollen, sondern sowohl runde Formen, als auch Formen mit Kanten einschließen sollen, wie es in der Zickzacklinie des gezeigten Ausführungsbeispiels bereits zum Ausdruck kommt. Wesentlich ist nur, dass sich die Rückwand 8 in den zwischen den Rippen 13 gelegenen Bereichen mit zunehmender seitlicher Entfernung von den Rippen 13 auch zunehmend nach innen hin von der Ebene, auf der die Rippen 13 an der Rückwand 8 ansetzen, entfernt. Es spielt keine Rolle, ob dies in Form eines runden oder abschnittsweise ebenen Verlaufs besagter Bereiche geschieht. Ebenso wenig kommt es auf den genauen Verlauf des Gradienten an.

Die geschlossene Kammer 7 ist bewusst so dimensioniert, dass im Querschnitt die Länge der Trennwand 7C, welche sie von der davor liegenden offenen Kammer 2 trennt, kürzer ist als die Breite einer Stromschiene 4, welche in der offenen Kammer 2 auf der Trennwand 7C aufliegt, so dass die Stromschiene 4 auch die Seitenwände 7A und 7B der Kammer 7 überdeckt. Die durch einen Stromabnehmer auf die Stromschiene 4 annähernd senkrecht von vorne ausgeübte Kraft wird hierdurch rückseitig direkt in Seitenwände 7A und 7B der Kammer 7 eingeleitet und von diesen auf die Rückwand 8 übertragen, ohne dass es zu einer größeren Durchbiegung der Trennwand 7C kommt.

Die Seitenwände 7A und 7B verlaufen in den Figuren 1 und 2 überwiegend senkrecht, jedoch nicht genau senkrecht, sondern etwas schräg zur mittleren Richtung der Rückwand 8 und damit auch schräg zu deren Normalenrichtung, welche in den Figuren 1 und 2 der Vertikalrichtung entspricht. Hierdurch wird eine gleichmäßige, d.h. symmetrische Aufteilung der von einem Stromabnehmer von vorne auf eine Stromschiene 4 ausgeübten Kraft auf beide die Stromschiene 4 abstützenden Seitenwände 7A und 7B der dahinter liegenden Kammer 7 erzielt.

Durch die Gestaltung des Querschnitts des Isolierprofils 1 und insbesondere seiner Rückwand 8 kann das Isolierprofil 1 direkt auf dem Trägerprofil 14 befestigt werden, ohne dass zur Einhaltung von Isolationsvorschriften im Bereich der stirnseitigen Verbindungsstellen zwischen aufeinanderfolgenden Isolierprofilen 1 zusätzliche Isolationselemente zwischen dem Isolierprofil 1 und dem Trägerprofil 14 eingelegt werden müssen. Es leuchtet ein, dass dies eine Einsparung von Bauteilen und Arbeitsgängen ermöglicht und somit die Montage einer Schleifleitung insgesamt vereinfacht.

Die hakenförmigen Befestigungselemente 11 und 12, die an die Rückwand 8 des Isolierprofils 1 einstückig angeformt sind und sich von dieser aus nach hinten erstrecken, erlauben eine rasche Befestigung des Isolierprofils 1 an einem Trägerprofil 14 durch einfaches Aufschnappen auf der gesamten Länge der beiden Profile ohne Benutzung von Werkzeugen und tragen damit wesentlich zu einer Vereinfachung der Montagearbeiten bei. Sie weisen zwei Eingriffsabschnitte 11A bzw. 12A auf, die schräg aufeinander zu gerichtet sind. Diese sind dazu bestimmt, mit einem schwalbenschwanzförmigen Vorsprung 15F, 15G, 15H des Trägerprofils 14 formschlüssig verrastet zu werden, wie es in Fig. 2 dargestellt ist.

Es versteht sich, dass hierfür eine ausreichende Flexibilität zumindest eines der Eingriffsabschnitte 11A und 12A Voraussetzung ist, wobei diese Flexibilität bei dem in den Figuren 1 und 2 gezeigten Ausführungsbeispiel in erster Linie durch das rechte Befestigungselement 12 bereitgestellt wird, das im Gegensatz zu dem linken Befestigungselement 11 keine geschlossene Kammer bildet, sondern einen Eingriffsabschnitt 12A mit einem freien Ende aufweist, der eine vergleichsweise wesentlich höhere Flexibilität hat als der andere Eingriffsabschnitt 11A. Das Befestigungselement 11 in Form einer geschlossenen Kammer fungiert in erster Linie als Traghaken des Isolierprofils 1, insbesondere wenn dieses am Einsatzort vertikal angeordnet ist, wie es in Fig, 3 zu sehen ist. In diesem Fall befindet sich das steifere Befestigungselement 11 mit der geschlossenen Kammer oben, damit es seine tragende Funktion erfüllen kann, und das flexiblere Befestigungselement 12, welches beim Aufschnappen des Isolierprofils 1 auf das Trägerprofil 14 wesentlich weiter ausgelenkt wird, befindet sich unten.

Die allgemeine Form des Trägerprofils 14 ähnelt in der Querschnittsansicht von Fig. 2 einer Wanne mit einem Boden 15E, 151 und zwei senkrecht von diesem abragenden Seitenteilen 15B und 15L. Die Seitenteile 15B und 15L erstrecken sich von dem Boden 15E, 15I aus zumindest bis auf die Höhe der Vorderseite des Isolierprofils 1 oder etwas darüber hinaus, wodurch das Isolierprofil 1 im fertig montierten Zustand von dem stabilen metallischen Trägerprofil 14 an drei von vier Seiten schützend umgeben ist.

An den Seitenteilen 15B und 15L der Wanne sind in Längsrichtung des Trägerprofils 14 verlaufende Kanäle 15D bzw. 15J ausgebildet, die zur Innenseite der Wanne hin geschlossen sind und zur Außenseite hin ebenfalls in Längsrichtung des Trägerprofils 14 verlaufende Schlitze 15C bzw. 15K aufweisen. Die Kanäle 15D und 15J und die Schlitze 15C und 15K erlauben die Einbringung und längsvariable Positionierung von Befestigungselementen, mit denen ein Trägerprofil 14 seinerseits an einer tragenden Struktur befestigt werden kann. Die freien Enden 15A und 15M der Seitenteile 15B und 15L sind im Querschnitt annähernd kreisförmig abgerundet, was die Verletzungsgefahr für das Montagepersonal beim Hantieren mit dem Trägerprofil 14 und beim Aufschnappen des Isolierprofils 1 verringert.

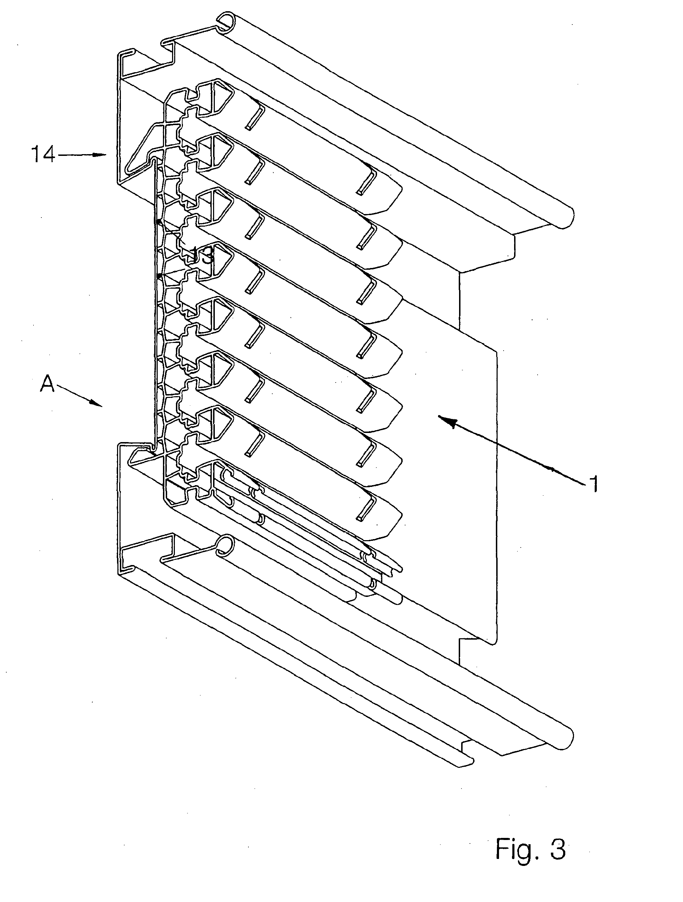

Eine perspektivische Ansicht eines Abschnitts einer erfindungsgemäßen Einheit aus einem Isolierprofil 1 und einem Trägerprofil 14 zeigt Fig. 3. Dabei ist die Länge im Verhältnis zur Breite nicht maßstäblich, sondern stark verkürzt dargestellt. Die in Fig. 3 an dem Isolierprofil 1 erkennbaren zahlreichen Öffnungen an der Vorderseite nahe den beiden Enden dienen zur formschlüssigen stirnseitigen Verbindung mehrerer Isolierprofile 1 miteinander unter Verwendung geeigneter Verbindungselemente, die aber hier nicht von Interesse ist. Die Ansichtsrichtung der Figuren 1 und 2 ist in Fig. 3 durch einen Pfeil A markiert.

Aus der vorausgehenden Beschreibung eines Ausführungsbeispiels ergeben sich für den Fachmann eine Vielzahl von Variationsmöglichkeiten, insbesondere in der Gestaltung des Querschnitts des Isolierprofils 1. Beispielsweise müssen die Abstandshalter 13 an der Rückwand 8 nicht unbedingt wie die Rippen 13 von der Rückwand 8 abragen, sondern sie könnten auch durch eine geeignete Formgebung der Rückwand selbst realisiert werden. So könnte die Rückwand 8 beispielsweise im Querschnitt eine so stark ausgeprägte Zickzackform haben, dass die Bereiche der äußeren Ecken der Zickzacklinie selbst die Funktion der Abstandshalter 13 übernehmen würden. Auch ist die genaue Formgebung der Kammern des Isolierprofils 1 eine Frage der Anpassung an die Form und die Abmessungen der verwendeten Stromschienen 4. Geeignete Modifikationen liegen im Ermessen des Fachmannes und sollen vom Schutz der Patentansprüche umfasst sein.

## Patentansprüche

1. Isolierprofil (1) für eine mehrpolige Schleifleitung, welches eine regelmäßige Anordnung von mehreren sich in Längsrichtung des Isolierprofils erstreckenden Kammern aufweist, wobei mindestens eine Gruppe von Kammern (2) vorhanden ist, die im Querschnitt nach einer Seite hin offen sind und dadurch eine offene Vorderseite (3) des Isolierprofils definieren, und wobei Wandabschnitte mehrerer nebeneinander liegender, im Querschnitt geschlossener Kammern (6, 7) zusammen eine der offenen Vorderseite (3) des Isolierprofils gegenüberliegende Rückwand (8) des Isolierprofils bilden, **dadurch gekennzeichnet, dass** an der Rückwand (8) des Isolierprofils (1) zur Befestigung an einem Trägerprofil (14) geeignete Befestigungselemente (11, 12) einstückig angeformt sind, dass eine regelmäßige Anordnung von Abstandshaltern (13) vorgesehen ist, die sich von der Rückwand (8) des Isolierprofils (1) aus nach hinten erstrecken und einen direkten Kontakt eines anderen Körpers mit der Rückwand (8) verhindern, sofern dieser vorbestimmte Mindestabmessungen aufweist, und dass die zwischen den Abstandshaltern (13) gelegenen Abschnitte der Rückwand (8) des Isolierprofils (1) jeweils eine Vertiefung nach innen aufweisen.

2. Isolierprofil nach Anspruch 1, **dadurch gekennzeichnet, dass** sich die Befestigungselemente (11, 12) von der Rückwand (8) des Isolierprofils (1) aus hakenförmig nach hinten erstrecken und eine ausreichende Flexibilität zur Bildung einer Schnappverbindung mit einem Trägerprofil (14) aufweisen.

3. Isolierprofil nach Anspruch 1 oder 2, **dadurch gekennzeichnet, dass** die Befestigungselemente (11, 12) zwei schräg aufeinander zu gerichtete Eingriffsabschnitte (11A, 12A) aufweisen, die zu einer formschlüssigen Verrastung mit einem schwalbenschwanzförmigen Vorsprung (15F, 15G, 15H) eines Trägerprofils (14) geeignet sind.

4. Isolierprofil nach einem der Ansprüche 1 bis 3, **dadurch gekennzeichnet, dass** die Abstandshalter (13) in Längsrichtung des Isolierprofils (1) verlaufende Rippen (13) sind.

5. Isolierprofil nach Anspruch einem der Ansprüche 1 bis 3, **dadurch gekennzeichnet, dass** die Abstandshalter (13) durch nach außen vorspringende Abschnitte der Rückwand (8) des Isolierprofils (1) gebildet werden.

6. Isolierprofil nach einem der Ansprüche 1 bis 5, **dadurch gekennzeichnet, dass** jedem Abstandshalter (13) eine geschlossene Kammer (7) des Isolierprofils (1) zugeordnet ist, deren Seitenwände (7A, 7B) jeweils zumindest annähernd in der Mitte eines zwischen den Abstandshaltern (13) gelegenen, nach innen vertieften Abschnitts der Rückwand (8) in diese übergehen.

7. Isolierprofil nach Anspruch 6, **dadurch gekennzeichnet, dass** die geschlossene Kammer (7) hinter einer offenen Kammer (2) des Isolierprofils (1) liegt, dass die der offenen Kammer (2) zugewandte Oberfläche der Trennwand (7C) zwischen der offenen Kammer (2) und der geschlossenen Kammer (7) einen Abschnitt einer rückseitigen Auflagefläche für eine zur Anordnung in der offenen Kammer (2) vorgesehene Stromschiene (4) bildet, und dass sich die rückseitige Auflagefläche für die Stromschiene (4) in der offenen Kammer (2) im Querschnitt seitlich über die Länge der Trennwand (7C) zwischen der offenen Kammer (2) und der geschlossenen Kammer (7) hinaus erstreckt.

8. Isolierprofil nach Anspruch 6 oder 7 **dadurch gekennzeichnet, dass** die Seitenwände (7A, 7B) der geschlossenen Kammer (7) schräg zur mittleren Richtung der Rückwand (8) des Isolierprofils (1) und zueinander symmetrisch bezüglich des Abstandshalters (13), welchem die Kammer (7) zugeordnet ist, verlaufen.

9. Mehrpolige Schleifleitung mit einer Vielzahl von fluchtend zueinander ausgerichteten Isolierprofilen nach Anspruch 1, in denen eine Vielzahl von Stromschienen (4) isoliert voneinander in parallel zueinander verlaufenden, zu einer Vorderseite (3) der Isolierprofile (1) hin offenen Kammern (2) angeordnet sind, und mit einer Vielzahl von in Längsrichtung parallel zu den Isolierprofilen in deren Längsrichtung angeordneten Trägerprofilen (14), an denen die Isolierprofile (1) im Bereich einer der Vorderseite (3) gegenüberliegenden Rückseite befestigt sind, **dadurch gekennzeichnet, dass** an einer Rückwand (8) eines Isolierprofils (1), welche die Rückseite desselben abschließt, zur Befestigung an einem Trägerprofil (14) geeignete Befestigungselemente (11, 12) einstückig angeformt sind, dass eine regelmäßige Anordnung von Abstandshaltern (13) vorgesehen ist, die sich von der Rückwand (8) des Isolierprofils (1) aus nach hinten erstrecken und einen direkten Kontakt eines anderen Körpers mit der Rückwand (8) verhindern, sofern dieser vorbestimmte Mindestabmessungen aufweist, und dass die zwischen den Abstandshaltern (13) gelegenen Abschnitte der Rückwand (8) des Isolierprofils (1) jeweils eine Vertiefung nach innen aufweisen.

10. Schleifleitung nach Anspruch 9, **dadurch gekennzeichnet, dass** sich die Befestigungselemente (11, 12) von der Rückwand (8) des Isolierprofils (1) aus hakenförmig nach hinten erstrecken, und dass das Trägerprofil (14) einen Vorsprung (15F, 15G, 15H) mit komplementär zu den Befestigungselementen (11, 12) geformten Abschnitten (15F, 15H) aufweist, wodurch eine Schnappverbindung zwischen dem Isolierprofil (1) und dem Trägerprofil (14) ermöglicht wird.

11. Schleifleitung nach Anspruch 10, **dadurch gekennzeichnet, dass** die Befestigungselemente (11, 12) zwei schräg aufeinander zu gerichtete Eingriffsabschnitte (11A, 12A) aufweisen und der Vorsprung (15F, 15G, 15H) des Trägerprofils (14) eine Schwalbenschwanzform aufweist, so dass die Schnappverbindung durch eine formschlüssige Verrastung der Eingriffsabschnitte (11A, 12A) der Befestigungselemente (11, 12) mit dem schwalbenschwanzförmigen Vorsprung (15F, 15G, 15H) herstellbar ist.

12. Schleifleitung nach einem der Ansprüche 9 bis 11, **dadurch gekennzeichnet, dass** das Trägerprofil (14) im Querschnitt die Grundform einer Wanne mit einem Boden (15E, 15I) und zwei zumindest annähernd senkrecht von diesem abragenden Seitenteilen (15B, 15L) aufweist, wobei sich der schwalbenschwanzförmige Abschnitt (15F, 15G, 15H) vom Boden (15E, 15I) der Wanne aus in das Innere derselben hineinerstreckt und die Seitenteile (15B, 15L) der Wanne zumindest bis auf Höhe des Vorderseite des Isolierprofils (1) reichen, wenn dieses an dem Trägerprofil (14) durch Aufschnappen auf dessen schwalbenschwanzförmigem Abschnitt (15F, 15G, 15H) befestigt ist.

13. Schleifleitung nach Anspruch 12, **dadurch gekennzeichnet, dass** an den Seitenteilen (15B, 15L) der Wanne in Längsrichtung des Trägerprofils (14) verlaufende Kanäle (15D, 15J) ausgebildet sind, die zur Innenseite der Wanne hin geschlossen sind und zur Außenseite hin ebenfalls in Längsrichtung des Trägerprofils (14) verlaufende Schlitze (15C, 15K) aufweisen.

## Claims

1. Insulating profile (1) for a multi-pole contact line, which exhibits a regular arrangement of a plurality of chambers which extend in the longitudinal direction of the insulating profile, wherein at least one group of chambers (2) is present which in cross-section are open towards one side and thereby define an open front side (3) of the insulating profile, and wherein wall sections of a plurality of chambers (6, 7) which are closed in cross-section and lie next to one another together form a rear wall (8) of the insulating profile lying opposite the open front side (3) of the insulating profile, **characterised in that** suitable fastening elements (11, 12) are formed in one piece on the rear wall (8) of the insulating profile (1) for fastening to a carrier profile (14), **in that** a regular arrangement of spacers (13) is provided which extend outwards towards the rear from the rear wall (8) of the insulating profile (1) and prevent direct contact of another body with the rear wall (8) where this exhibits predetermined minimum dimensions, and **in that** the sections of the rear wall (8) of the insulating profile (1) located between the spacers (13) each exhibit an inward recess.

2. Insulating profile according to claim 1, **characterised in that** the fastening elements (11, 12) extend outwards in a hook shape towards the rear from the rear wall (8) of the insulating profile (1) and exhibit sufficient flexibility to form a snap connection with a carrier profile (14).

3. Insulating profile according to claim 1 or 2, **characterised in that** the fastening elements (11, 12) exhibit two engagement sections (11A, 12A) which are directed towards one another at an oblique angle and are suitable for positive (form-locking) locking with a dovetail-shaped projection (15F, 15G, 15H) of a carrier profile (14).

4. Insulating profile according to one of claims 1 to 3, **characterised in that** the spacers (13) are ribs (13) which run in the longitudinal direction of the insulating profile (1).

5. Insulating profile according to one of claims 1 to 3, **characterised in that** the spacers (13) are formed by sections of the rear wall (8) of the insulating profile (1) which project outwards.

6. Insulating profile according to one of claims 1 to 5, **characterised in that** each spacer (13) co-operates with a closed chamber (7) of the insulating profile (1), the side walls (7A, 7B) of which each run into the rear wall (8) at least roughly in the middle of a section of the rear wall (8) which is located between the spacers (13) and recessed towards the inside.

7. Insulating profile according to claim 6, **characterised in that** the closed chamber (7) lies behind an open chamber (2) of the insulating profile (1), **in that** the surface of the dividing wall (7C) between the open chamber (2) and the closed chamber (7) facing the open chamber (2) forms a section of a rear supporting surface for a conductor rail (4) which is provided for arrangement in the open chamber (2), and **in that** the rear supporting surface for the conductor rail (4) in the open chamber (2) in cross-section extends laterally beyond the length of the dividing wall (7C) between the open chamber (2) and the closed chamber (7).

8. Insulating profile according to claim 6 or 7, **characterised in that** the side walls (7A, 7B) of the closed chamber (7) run at an oblique angle to the central axis of the rear wall (8) of the insulating profile (1) and symmetrically to one another in relation to the spacer (13) which co-operates with the chamber (7).

9. Multi-pole contact line with a plurality of insulating profiles according to claim 1 which are aligned flush with one another and in which are arranged a plurality of conductor rails (4) insulated from one another in chambers (2) which run parallel to one another and are open towards a front side (3) of the insulating profiles (1), and with a plurality of carrier profiles (14) which are arranged in the longitudinal direction parallel to the insulating profiles in the longitudinal direction thereof and on which the insulating profiles (1) are fastened in the region of a rear side lying opposite the front side (3), **characterised in that** suitable fastening elements (11, 12) are formed in one piece on a rear wall (8) of an insulating profile (1) which closes the rear side thereof for fastening to a carrier profile (14), **in that** a regular arrangement of spacers (13) is provided which extend outwards towards the rear from the rear wall (8) of the insulating profile (1) and prevent direct contact of another body with the rear wall (8) provided this exhibits predetermined minimum dimensions, and **in that** the sections of the rear wall (8) of the insulating profile (1) located between the spacers (13) each exhibit an inward recess.

10. Contact line according to claim 9, **characterised in that** the fastening elements (11, 12) extend out from the rear wall (8) of the insulating profile (1) towards the rear in a hook shape, and **in that** the carrier profile (14) exhibits a projection (15F, 15G, 15H) with sections (15F, 15H) shaped so as to be complementary to the fastening elements (11, 12), thereby allowing a snap connection between the insulating profile (1) and the carrier profile (14).

11. Contact line according to claim 10, **characterised in that** the fastening elements (11, 12) exhibit two engagement sections (11A, 12A) which are directed towards one another at an oblique angle, and **in that** the projection (15F, 15G, 15H) of the carrier profile (14) exhibits a dovetail shape so that the snap connection can be produced by a positive (form-locking) locking of the engagement sections (11A, 12A) of the fastening elements (11, 12) with the dovetail-shaped projection (15F, 15G, 15H).

12. Contact line according to one of claims 9 to 11, **characterised in that** the carrier profile (14) in cross-section exhibits the basic shape of a trough with a bottom (15E, 151) and two side parts (15B, 15L) projecting at least roughly perpendicularly from the latter, wherein the dovetail-shaped section (15F, 15G, 15H) extends from the bottom (15E, 151) of the trough into the interior thereof and the side parts (15B, 15L) of the trough extend at least to the height of the front side of the insulating profile (1) when this is fastened to the carrier profile (14) by snapping onto its dovetail-shaped section (15F, 15G, 15H).

13. Contact line according to claim 12, **characterised in that** the side parts (15B, 15L) of the trough are provided with channels (15D, 15J) which extend in the longitudinal direction of the carrier profile (14) and are closed to the inside of the trough and to the outside exhibit slots (15C, 15K) which also run in the longitudinal direction of the carrier profile (14).

## Revendications

1. Profilé isolant (1) pour une ligne de contact multipolaire, lequel présente un agencement régulier de plusieurs compartiments s'étendant dans la direction longitudinale du profilé isolant, sachant qu'au moins un groupe de compartiments (2) est présent, lesquels sont ouverts dans la section transversale en direction d'un côté et définissent ce faisant un côté avant (3) ouvert du profilé isolant et sachant que des sections de paroi de plusieurs compartiments fermés (6, 7) dans la section transversale, situés les uns à côté des autres, forment conjointement une paroi arrière (8) du profilé isolant, faisant face au côté avant (3) ouvert du profilé isolant, **caractérisé en ce que** des éléments de fixation (11, 12) adaptés à la fixation sur un profilé de support (14) sont formés d'un seul tenant au niveau de la paroi arrière (8) du profilé isolant (1), **en ce qu'**un agencement régulier d'écarteurs (13) est prévu, lesquels s'étendent vers l'arrière depuis la paroi arrière (8) du profilé isolant (1) et empêchent tout contact direct d'un autre corps avec la paroi arrière (8) dans la mesure où ledit corps présente des dimensions minimales prédéterminées, et **en ce que** les sections, placées entre les écarteurs (13), de la paroi arrière (8) du profilé isolant (1) présentent respectivement un renfoncement vers l'intérieur.

2. Profilé isolant selon la revendication 1, **caractérisé en ce que** les éléments de fixation (11, 12) s'étendent vers l'arrière depuis la paroi arrière (8) du profilé isolant (1) de manière à présenter une forme de crochet et présentent une flexibilité suffisante pour former un système d'assemblage à déclic avec un profilé de support (14).

3. Profilé isolant selon la revendication 1 ou 2, **caractérisé en ce que** les éléments de fixation (11, 12) présentent deux sections d'engrènement (11A, 12A) orientées l'une sur l'autre de manière inclinée, lesquelles sont adaptées pour un enclenchement par complémentarité de forme avec une partie faisant saillie (15F, 15G, 15H) en forme de queue-d'aronde d'un profilé de support (14).

4. Profilé isolant selon l'une quelconque des revendications 1 à 3, **caractérisé en ce que** les écarteurs (13) sont des nervures (13) s'étendant dans la direction longitudinale du profilé isolant (1).

5. Profilé isolant selon l'une quelconque des revendications 1 à 3, **caractérisé en ce que** les écarteurs (13) sont formés par des sections, faisant saillie vers l'extérieur, de la paroi arrière (8) du profilé isolant (1).

6. Profilé isolant selon l'une quelconque des revendications 1 à 5, **caractérisé en ce qu'**est associé à chaque écarteur (13) un compartiment fermé (7) du profilé isolant (1), dont les parois latérales (7A, 7B) deviennent la paroi arrière respectivement au moins de manière approximative au centre d'une section, placée entre les écarteurs (13), en renfoncement vers l'intérieur, de ladite paroi arrière (8).

7. Profilé isolant selon la revendication 6, **caractérisé en ce que** le compartiment fermé (7) se trouve derrière un compartiment ouvert (2) du profilé isolant (1), **en ce que** la surface, tournée vers le compartiment ouvert (2), de la paroi de séparation (7C) forme, entre le compartiment ouvert (2) et le compartiment fermé (7), une section d'une face d'appui côté arrière pour un rail conducteur (4) prévu pour être agencé dans le compartiment ouvert (2), et **en ce que** la face d'appui côté arrière pour le rail conducteur (4) s'étend dans le compartiment ouvert (2) dans la section transversale latéralement sur la longueur de la paroi de séparation (7C) entre le compartiment ouvert (2) et le compartiment fermé (7).

8. Profilé isolant selon la revendication 6 ou 7, **caractérisé en ce que** les parois latérales (7A, 7B) du compartiment fermé (7) s'étendent de manière inclinée par rapport à la direction centrale de la paroi arrière (8) du profilé isolant (1) et de manière symétrique les unes par rapport aux autres par rapport à l'écarteur (13), auquel est associé le compartiment (7).

9. Ligne de contact multipolaire comprenant une pluralité de profilés isolants orientés les uns par rapport aux autres au même niveau selon la revendication 1, dans lesquels est disposée une pluralité de rails conducteurs (4) de manière isolée les uns des autres dans des compartiments ouverts (2) s'étendant parallèlement les uns par rapport aux autres, ouverts en direction d'un côté avant (3) des profilés isolants (1), et comprenant une pluralité de profilés de support (14) disposés dans la direction longitudinale parallèlement aux profilés isolants dans leur direction longitudinale, sur lesquels les profilés isolants (1) sont fixés dans la zone d'un côté arrière faisant face au côté avant (3), **caractérisée en ce que** des éléments de fixation (11, 12) adaptés aux fins de la fixation au niveau d'un profilé de support (14) sont formés d'un seul tenant au niveau d'une paroi arrière (8) d'un profilé isolant (1), qui se trouve dans le prolongement du côté arrière dudit profilé isolant, **en ce qu'**un agencement régulier d'écarteurs (13) est prévu, lesquels s'étendent vers l'arrière depuis la paroi arrière (8) du profilé isolant (1) et empêchent tout contact direct d'un autre corps avec la paroi arrière (8) dans la mesure où ledit corps présente des dimensions minimales prédéterminées, et **en ce que** les sections, placées entre les écarteurs (13), de la paroi arrière (8) du profilé isolant (1) présentent respectivement un renfoncement vers l'intérieur.

10. Ligne de contact selon la revendication 9, **caractérisée en ce que** les éléments de fixation (11, 12) s'étendent vers l'arrière depuis la paroi arrière (8) du profilé isolant (1) de manière à présenter une forme de crochet, et **en ce que** le profilé de support (14) présente une partie faisant saillie (15F, 15G, 15H) comprenant des sections (15F, 15H) formées en complément des éléments de fixation (11, 12), ce qui permet un assemblage par déclic entre le profilé isolant (1) et le profilé de support (14).

11. Ligne de contact selon la revendication 10, **caractérisée en ce que** les éléments de fixation (11, 12) présentent deux sections d'engrènement (11A, 12A) orientées l'une vers l'autre de manière inclinée, et **en ce que** la partie faisant saillie (15F, 15G, 15H) du profilé de support (14) présente une forme de queue-d'aronde, de sorte que l'assemblage par déclic peut être produit par un enclenchement par complémentarité de forme des sections d'engrènement (11A, 12A) des éléments de fixation (11, 12) avec la partie faisant saillie (15F, 15G, 15H) en forme de queue-d'aronde.

12. Ligne de contact selon l'une quelconque des revendications 9 à 11, **caractérisée en ce que** le profilé de support (14) présente, dans la section transversale, la forme de base d'une cuve comprenant un fond (15E, 151) et deux parties latérales (15B, 15L) dépassant au moins approximativement perpendiculairement au fond, sachant que la section (15F, 15G, 15H) en forme de queue-d'aronde s'étend depuis le fond (15E, 151) de la cuve à l'intérieur de cette dernière et que les parties latérales (15B, 15L) de la cuve arrivent au moins à la hauteur du côté avant du profilé isolant (1) lorsque ce dernier est fixé au niveau du profilé de support (14) par encliquetage sur la section (15F, 15G, 15H) en forme de queue-d'aronde de ce dernier.

13. Ligne de contact selon la revendication 12, **caractérisée en ce que** sont réalisées, au niveau des parties latérales (15B, 15L) de la cuve, des canaux (15D, 15J) s'étendant dans la direction longitudinale du profilé de support (14), lesquels sont fermés en direction du côté intérieur de la cuve et présentent des entailles (15C, 15K) s'étendant en direction du côté extérieur de la même manière dans la direction longitudinale du profilé de support (14).
